# EUROPEAN PATENT APPLICATION

(11) **EP 1 791 053 A1**
(43) Date of publication of application: **30.05.2007**
(21) Application number: 06023167.7
(22) Date of filing: 07.11.2006
(51) Int. Cl.: G06F 3/048

(54) **Systems and methods of processing annotations and multimodal user inputs**

(30) Priority: 28.11.2005 US 287850
(71) Applicant: SAP AG, 69190 Walldorf (DE)
(72) Inventor: Gurram, Rama K., San Jose, CA 95135 (US); James, Frankie, Sunnyvale, CA 94086 (US)
(74) Representative: Müller-Boré & Partner Patentanwälte

(57) **Abstract**

Embodiments of the present invention provide multimodal input capability. In one embodiment the present invention includes an input method comprising displaying one or more display objects to a user, associating at least one voice mode with one of said display objects, associating at least one stylus mode with the display object, and associating at least one voice navigation command with the display object. The system may prompt a user for a plurality of inputs, receive a voice command or a touch screen command specifying one of the plurality of inputs, activate a voice and touch screen mode associated with the specified input, and process the voice input in accordance with the associated voice mode or the associated touch screen mode.

## Description

### BACKGROUND

The present invention relates to user interfaces and processing user inputs, and in particular, to receiving and processing annotations and multimodal user inputs.

The growing prevalence of computer systems in society has given rise to the need for easier and more harmonious techniques for interfacing with computers. Computer systems of all kinds can be found in a wide variety of uses. Portable computer systems such as personal digital assistants ("PDAs"), cellular phones, portable music and video players, laptops, and tablet personal computers can be found in a wide variety of applications. Traditional methods of interacting with computer systems include use of a keyboard or point and click device such as a mouse. As such systems become more integrated into daily life, new mechanisms of providing inputs have been developed, such as the use of a touch screen. In some systems, complex software may be loaded onto the computer and activated to allow voice inputs to implement operating system commands and translate voice inputs into text.

The problem with existing inputs systems is that such systems do not function seamlessly with the way human beings interact with computers. Existing voice command systems, when activated, require a user to provide inputs exclusively though voice commands, which can be extremely unnatural. On the other hand, most existing touch screen systems are limited to providing inputs using a touch screen device, such as a stylus, in conjunction with a mouse, keyboard, or keypad. It would be desirable to provide a system wherein a user can use multiple different modes of input to flexibly choose the best input mechanism for the particular moment. Additionally, the best mode of input may change depending on the type of input being entered. Accordingly, it would be desirable to provide users with different input modes that are tailored for specific tasks.

Thus, there is a need for improved input mechanisms. The present invention solves these and other problems by providing systems and methods of processing annotations and multimodal user inputs.

### SUMMARY

Embodiments of the present invention improve the flexibility of user inputs. In one embodiment, the present invention includes a computer-implemented method for processing user inputs comprising prompting a user for a plurality of inputs, receiving a command specifying one of the plurality of inputs, wherein the system is activated to receive both a voice command and a manual selection command, activating a voice and manual selection mode associated with the specified input, an if a voice input is detected, processing the voice input in accordance with the associated voice mode, or if a manual selection input is detected, processing the touch screen input in accordance with the associated manual selection mode.

In one embodiment, the plurality of inputs are display objects each having an associated voice command, voice mode, and touch screen mode.

In one embodiment, the method further comprises storing metadata for defining associations between display objects and voice commands, voice modes, and touch screen modes.

In one embodiment, the display objects include a page, a section of a page, a particular field of a page, an image, a button, a radio button, a check box, a menu, a list, an icon, a link, a table, a slider, a scroll bar, an user interface control, or a step of a program that is illustrated graphically on a screen.

In one embodiment, the voice mode is a short text entry mode for translating a voice input into text and inserting the text into a field.

In one embodiment, the voice mode is a free form dictation mode for translating voice dictations into text.

In one embodiment, the voice mode is voice annotation mode for associating a voice input with a particular display object.

In one embodiment, the voice mode is a voice authorization mode for performing an authorization using a received input.

In another embodiment, the present invention includes a computer-implemented method for processing user inputs comprising displaying one or more display objects to a user, associating at least one voice mode with one of said display objects, associating at least one touch screen mode with the display object, and associating at least one voice command with the display object.

In one embodiment, the method further comprises receiving a voice command or a touch screen command specifying one of the display objects, and in accordance therewith, activating a voice and touch screen mode associated with the specified input.

In one embodiment, the method further comprises detecting a voice input or touch screen input, wherein if a voice input is detected, processing the voice input in accordance with an associated voice mode, or if a touch screen input is detected, processing the touch screen input in accordance with an associated touch screen mode.

In one embodiment, the voice mode translates a voice input into text.

In one embodiment, the voice mode associates an annotation with the display obj ect.

In one embodiment, the voice mode performs an authorization.

In one embodiment, the display object is an element of a screen displayed to a user by a computer system.

In one embodiment, the display object is an application page or element of a page displayed to a user by an application.

In one embodiment, the display objects include a page, a section of a page, a particular field of a page, an image, a button, a radio button, a drop down menu, an icon, a link, or a step of a program that is illustrated graphically on a screen.

In one embodiment, the display objects include a web page.

In another embodiment, the present invention includes a computer system including software for processing user inputs, the software comprising an annotation component for associating voice or touch screen inputs with particular objects in a display, an input controller for selecting between voice and touch screen inputs, a speech recognition component for receiving grammars and voice inputs and providing recognition results, and metadata for specifying said grammars and said associations of voice or touch screen inputs with particular objects in a display.

In one embodiment, the software further comprises an association model for defining the association between voice and touch screen inputs with particular objects in a display.

In one embodiment, the software further comprises an authorization component for performing an authorization using a received input.

In one embodiment, the objects in the display include a page, a section of a page, a particular field of a page, an image, a button, a radio button, a drop down menu, an icon, a link, or a step of a program that is illustrated graphically on a screen.

In one embodiment, the system is a client system that downloads pages over a network, and wherein the pages include said metadata.

In one embodiment, said metadata further defines associations between objects in the display and voice commands, voice modes, and touch screen modes.

In another embodiment, the present invention includes a computer-readable medium containing instructions for controlling a computer system to perform a method of processing user inputs comprising displaying a plurality of display objects, receiving a command specifying one of the plurality of display objects, wherein the command is a voice command or a touch screen command, activating a voice and touch screen mode associated with the specified display object, and if a voice input is detected, processing the voice input in accordance with the associated voice mode, or if a touch screen input is detected, processing the touch screen input in accordance with the associated touch screen mode.

In one embodiment, the method further comprises storing metadata for defining associations between display objects and voice commands, voice modes, and touch screen modes.

In another embodiment, the present invention includes a computer-readable medium containing instructions for controlling a computer system to perform a method of processing user inputs comprising displaying one or more display objects to a user, associating at least one voice mode with one of said display objects, associating at least one touch screen mode with the display object, and associating at least one voice command with the display object.

In one embodiment, the method further comprises receiving a voice command or a touch screen command specifying one of the display objects, activating a voice and touch screen mode associated with the specified object, and detecting a voice input or touch screen input, wherein if a voice input is detected, processing the voice input in accordance with an associated voice mode, or if a touch screen input is detected, processing the touch screen input in accordance with an associated touch screen mode.

The following detailed description and accompanying drawings provide a better understanding of the nature and advantages of the present invention.

### BRIEF DESCRIPTION OF THE DRAWINGS

Fig. 1 illustrates processing user inputs according to one embodiment of the present invention.

Fig. 2 illustrates computer system software for processing user inputs according to one embodiment of the present invention.

Fig. 3 illustrates a method of processing user inputs by associating voice modes and stylus modes with display objects according to one embodiment of the present invention.

Fig. 4 illustrates a method of processing voice or stylus inputs according to one embodiment of the present invention.

Fig. 5 illustrates a display with multiple display objects according to one embodiment of the present invention.

Fig. 6 is an example graphical user interface illustrating one embodiment of the present invention.

Fig. 7 is an example graphical user interface illustrating another embodiment of the present invention.

Fig. 8 is an example graphical user interface illustrating another embodiment of the present invention.

Fig. 9 is an example graphical user interface illustrating another embodiment of the present invention.

Fig. 10 illustrates a network based implementation of the present invention.

Fig. 11 is an example flow chart of a multimodal interaction across a network according to one embodiment of the present invention.

Fig. 12 is an example flow chart of a multimodal interaction according to one embodiment of the present invention.

### DETAILED DESCRIPTION

Described herein are techniques for processing user inputs. In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include obvious modifications and equivalents of the features and concepts described herein.

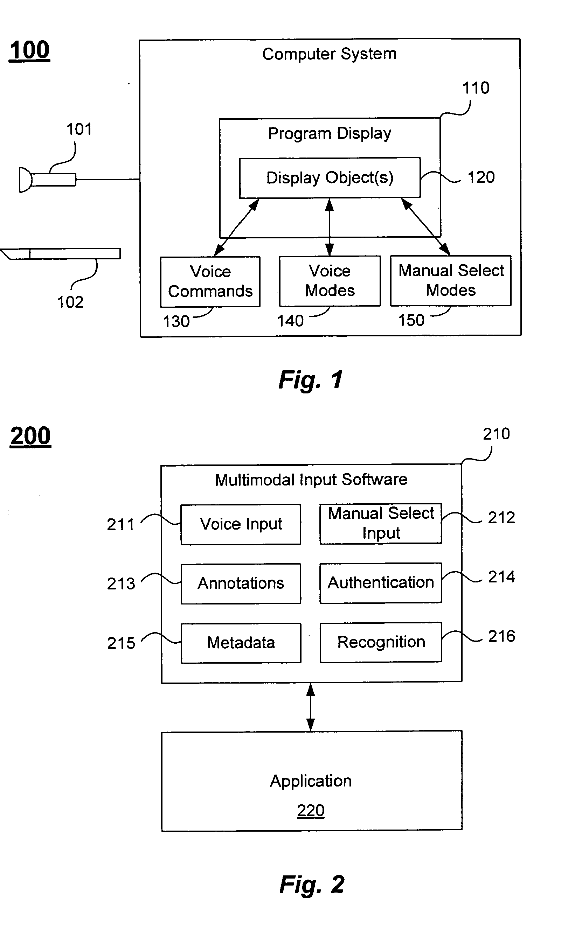

Fig. 1 illustrates processing user inputs according to one embodiment of the present invention. Embodiments of the present invention improve the interactive experience of working with computer systems by providing multiple input modes. According to one aspect of the present invention, a computer system 100 may include a microphone 101 for receiving voice inputs. Computer system 101 may also include other manual input mechanisms such as a keyboard; mouse, or a touch screen display for receiving manual selection inputs (e.g., keyboard entries, mouse clicks, or touch screen inputs). One way of providing touch screen inputs is to use a stylus 102, for example. A stylus is a handheld device typically having an elongated body with a tapered tip similar to a traditional pencil or pen. A software program may display a variety of objects 120 to a user that are associated with multiple different voice functionality and keyboard, mouse, or stylus functionality. For example, a user may interact with objects in a program display 110 by issuing voice inputs through a microphone 101 coupled to the computer system 100. A user may also interact with objects in the display 110 by "clicking," "tapping," or "writing" on the display with a mouse or the stylus, for example. A program display 110 may include one or more display objects 120. In one embodiment, a display object is an element of a screen displayed to a user by a computer system, for example, on a monitor or other display device. In another embodiment, a display object is an application page or element of a page displayed to a user by an application. In some embodiments of the present invention, a display object may include an entire page, such as a web page in a web based application or a display page generated by a native application. As illustrated below, display objects may also include sections of pages (i.e., particular areas of a screen or page), particular fields of a page (e.g., for text entry), images (e.g., pictures), buttons, radio buttons, check boxes, menus (e.g., drop down menus or lists), icons, links, tables, sliders, scroll bars, user interface controls (e.g., HTMLB controls), or steps of a program that are illustrated graphically on a screen. The types of display objects listed above and disclosed herein is not exhaustive.

Embodiments of the present invention allow users to flexibly interact with different types of display objects using multiple input modes (e.g., using either voice or touch screenmanual select inputs such as a stylus). For example, in one embodiment the software is activated to receive either voice or stylus inputs for selecting fields of a page, and a user may even enter data into a selected field using either voice or stylus data entry. For example, the system may be activated to receive both a voice command and a manual selection command for selecting a display object. Other embodiments allow users to associate voice inputs or touch screen inputs with particular display objects. For example, in one embodiment a user may attach a voice note or a handwritten stylus note to a web page, a particular section of a web page, or even a particular image of a web page. As illustrated below, embodiments of the present invention may be implemented in a web-based architecture or as an enhancement to a native application.

Referring again to Fig. 1, display objects such as web pages or fields in an application display may be associated with different voice and touch screenmanual select inputs (e.g., a touch screen input). As illustrated in Fig. 1, computer program display 110 includes one or more display objects 120. Display object 120 may be associated with particular voice commands 130, voice modes 140, and stylus manual select modes 150 (e.g., a touch screen mode). As mentioned above, example manual select modes include keyboard inputs, mouse inputs, or stylus (touch screen) inputs. In this description, it is to be understood that the term "stylus mode" and "touch screen mode" may be used interchangeably to refer to any mode associated with a touch screen input of which a stylus is just an example. For example, a page of an application may include a number of labeled fields for entering data. According to prior art techniques, data could be entered into each field by moving a mouse pointer over the field and entering a mouse click to move the cursor into the field. One aspect of the present invention allows fields to be selected using either voice or or manual inputs, such as mouse or stylus inputs. Accordingly, each display object may have an associated voice command 130 that may be used to select a particular object, such as a particular field, for example. Thus, the system may be "listening" for voice command inputs associated with one of the fields. The voice command associated with each object may be a particular grammar, wherein when a voice input is received and the particular grammar is detected by a speech recognizer, the associated display object is selected for further manipulation, such as data entry, for example. The system may also be waiting to detect a stylus input, for example. If a touch screen detects a "tap" of the stylus on a particular object (e.g., in a particular data entry field), then the system will select the object for further manipulation.

Each display object may further have associated voice modes 140 and stylus manual select modes 150 (e.g., a touch screen mode). For example, a data entry field may be associated with a "short text entry" voice mode. A short text entry voice mode may cause the system to automatically enable a microphone and speech recognizer so that if a user provides a voice input, the voice input is translated into text (i.e., recognized) and the text may be entered into the data entry field. Other example voice modes that may be associated with particular display objects include a "free form dictation mode," "voice annotation mode," or "voice authorization mode," for example. Free form dictation mode may allow a user to dictate notes into longer text fields, such as a "Notes" field. Accordingly, a display.object such as a "Notes" field may be associated with a free form dictation mode so that when such object is selected, the system automatically activates the microphone and recognizer to receive and translate a voice input into text and enter the text in the particular field. Voice annotation mode may allow a user to associate a voice input with a particular display object, such as a page as a whole, or objects in the page such as a "picture" or a "Note," for example. Accordingly, a display object such as a "Notes" field may be associated with a voice annotation mode so that when such object is selected, the system automatically activates the microphone, stores a voice input, and associates the voice input with the display object. Voice authorization mode may allow a user to associate an authorization with a display object, such as a "sales proposal web page" or a "price" field of a page. Accordingly, a display object such as a "price" field may be associated with an authorization mode so that when such object is selected, the system automatically activates the microphone, receives input speech or handwritten signature with the stylus, and performs an authorization on the received input to verify that an authorized user is associated with the object (e.g., only authorized users may be able to make changes to the price). Examples of these modes are provided below. Similarly, each object may be associated with particular stylus manual select modes, such as "mouse clicks," "taps," or "text entry." Text entry modes may include either a stylusn "ink mode" or a "text recognition mode." Ink mode may configure the stylus to receive free form writings and store the touch screen input as a script (e.g., hand writing). Text recognition mode may receive the touch screen stylus written script and input the script letter by letter or as a whole sequences into a script recognizer for translating the script into text. Since different input modes may be more or less useful with different types of display objects, embodiments of the present invention associate particular input modes (voice or stylus) with particular objects.

Fig. 2 illustrates computer system software for processing user inputs according to one embodiment of the present invention. Computer software system 200 may be executed on a microprocessor based system, for example, and stored on a hard drive, local memory, or other computer-readable medium containing instructions for controlling a computer system to perform the methods described herein. The present invention may include a software component 210 that processes voice and touch screen inputs and performs annotations, authentications, and recognition, for example. Example software may include a voice input component 211, stylus manual select input component 212, annotation component 213, authentication component 214, metadata 215, and a recognition component 216. It is to be understood that embodiments of the present invention may include some or all of these components. Voice input component 211 may process voice inputs, such as the voice commands and voice modes described above. An example of a manual select input 212 is a stylus input. Stylus input component 212 may process touch screen inputs, such as taps or text entry also described above. Annotation component 213 may implement annotation functionality, so that a voice, for example, may be attached to an image. Authentication component may perform authentication functions including working with a recognition engine to verify voice patterns or stylus signatures and managing security such as data access and modification privileges, for example. As described in more detail below, software 210 may use metadata 215 for defining associations between display objects and voice commands, voice modes, and stylus modes. Software 210 may generate such metadata based on user inputs, or it may use metadata generated by other users, or both. Metadata 215 may also be used for specifying recognition parameters, such as grammars that define voice commands and/or voice mode inputs or text recognition parameters if a stylus script recognizer is used. Metadata 215 may also be used for specifying annotations and authentication rules, for example.

Software 210 may interface with a native application 220 to provide some or all of the multimodal functionality described herein. In one embodiment, application 220 may be a web based client, such as a web browser, and software 220 may work with the client software (e.g., as a plug-in or helper program) to provide some or all of the multimodal functionality described herein. Examples of a web-based application are provided below.

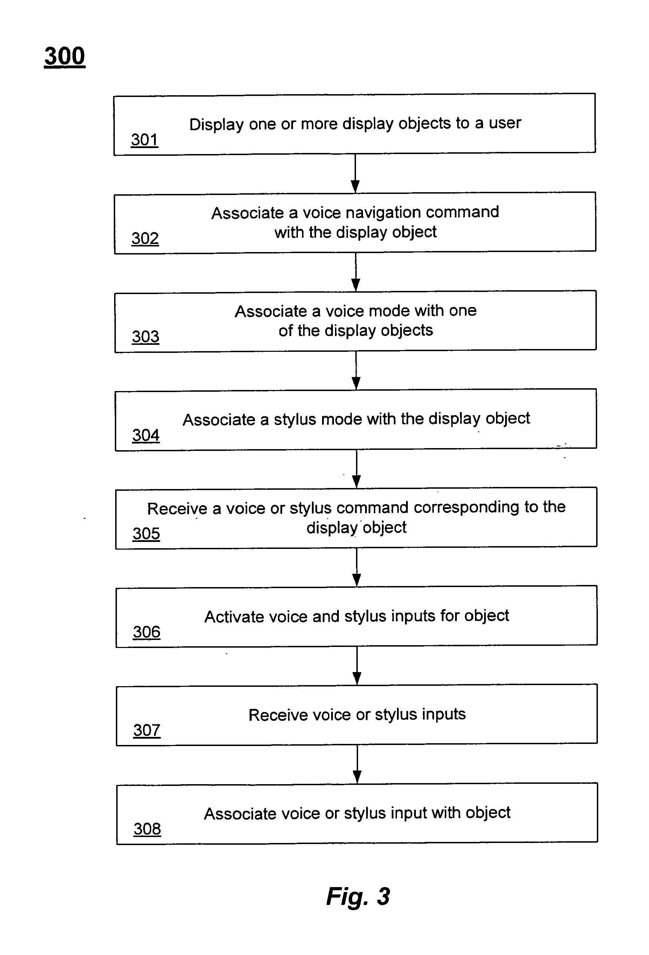

Fig. 3 illustrates a method 300 of processing user inputs by associating voice modes and stylus modes with display objects according to one embodiment of the present invention. At 301, one or more display objects are displayed to a user. As mentioned above, display objects may include a page, sections of a page, images, or fields of a page (e.g., text entry fields or links). Voice commands, such as navigation commands, may be associated with different objects in the display as illustrated at 302. For example, a page may include three fields for entering text labeled "Name," "Address," and "Comments." Different voice commands for the page may be associated with each of the different fields to allow users to select each field using a voice input. For example, one voice command may be associated with the "Name" field (e.g., a grammar used to recognize when a user speaks the word "name"), and other voice commands may be associated with other fields to allow users to activate the other fields with voice commands. Each display object may also be associated with different voice modes as illustrated at 303. The "Name" field in the previous example may be associated with a "short text entry" mode, for example, so that a user may speak a name and the voice input is automatically recognized and entered as text into the field. It may be more useful to associate different display objects with particular voice modes to improve the user's experience. At 304, stylus modes, such as tapping or text entry, may be associated with each display object. At 305, the system may receive a voice or stylus command corresponding to a particular display object from a user. At 306, the voice mode and stylus mode inputs for the selected object are activated. At 307, voice or stylus inputs are received. At 308, the received voice or stylus input is associated with the object. Accordingly, users are provided with a flexible system for selecting objects in a display (e.g., either by voice or stylus) and may flexibly enter data into input fields or attach data using multiple input modes (e.g., voice or stylus).

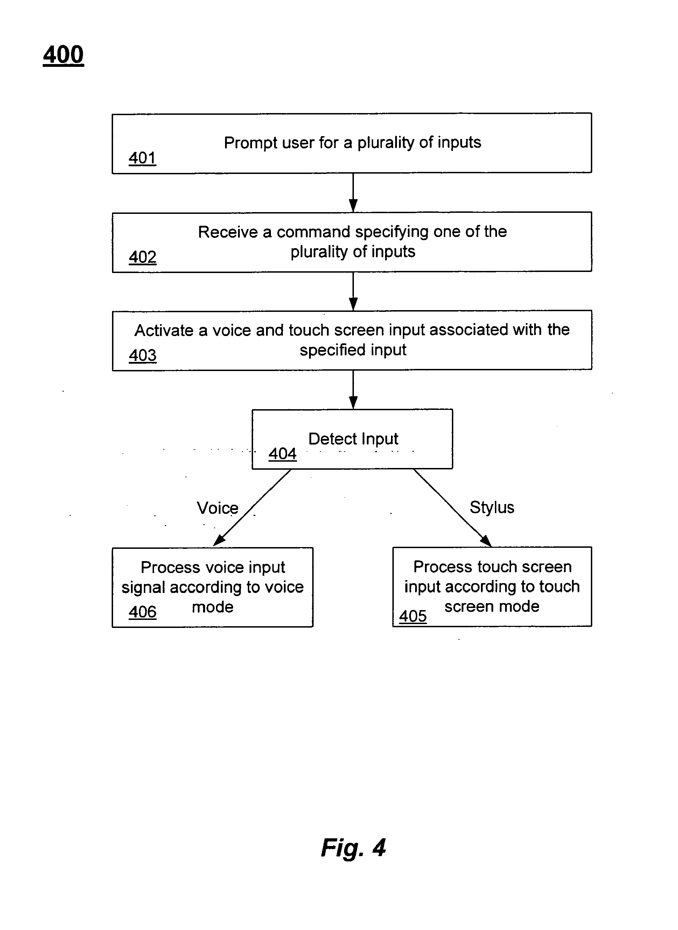

Fig. 4 illustrates a method 400 of processing voice or stylus inputs according to one embodiment of the present invention. At 401, a user is prompted for a plurality of inputs. For example, a page may be displayed to a user, and the page may include multiple text entry input fields, selectable links or images, or a variety of other potential inputs. At 402, the system receives a command specifying one of the inputs. In one embodiment, a user may tap the stylus on an object to select the object (e.g., tapping a "Name" input field). Alternatively, a user may speak a voice command to select a particular object (e.g., speaking the word "name"). At 403, the system activates a voice and touch screen input mode associated with the specified input. For example, if the input is an "Attach Notes" field, the system may activate the voice annotation mode and the stylus text entry mode, and generate a pop up notepad for a user to enter voice inputs or stylus script notes or diagrams using the stylus to be stored as notes. At this point, a user may have the option of either entering information using voice or touch screen inputs, and the system may wait for a user to enter inputs using either of these input modes. At 404, a user may provide an input and the system detects an input. If the user enters information using the stylus, the system may automatically upon detecting a touch screen input transition to a new state illustrated at 405. At 405, the system receives the stylus input and processes the touch screen input according to the particular touch screen (stylus) mode associated with the object. Alternatively, if the user starts speaking, the system may automatically upon detecting a voice input transition to a new state illustrated at 406. At 406, the system receives the voice input and processes the voice input according to the particular voice mode associated with the object.

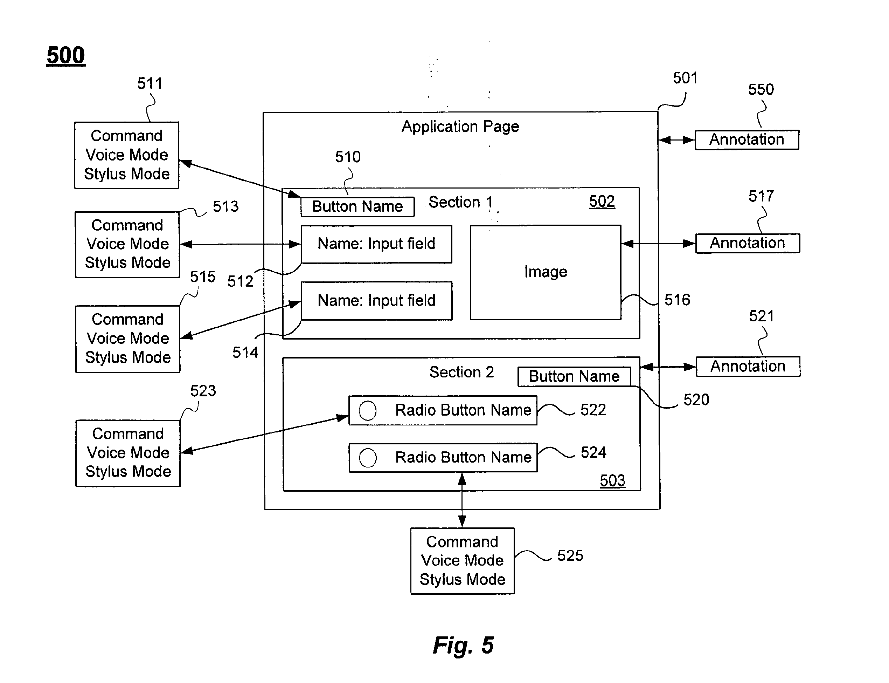

Fig. 5 illustrates a display 500 of an application with multiple display objects according to one embodiment of the present invention. In accordance with the execution of an application, a page 501 may be displayed to a user (e.g., as a graphical user interface). In this example, page 501 has an attached annotation 550. Annotation 550 may be a voice recording or stylus note, for example. Page 501 may include sections 502 and 503 that each correspond to different aspects of the program, such as different topics, categories of data, or different functionalities, for example. Section 502 ("Section 1") may include a button 510 having a button name displayed on it. Button 510 may have associated voice commands, voice modes, and stylus modes 511. For example, the voice command associated with the button may allow a user to activate the button by speaking the button name. Once the button is activated, the next steps may depend on the voice mode and stylus mode associated with the button. Similarly, section 502 includes two input fields 512 and 514 with associated commands, voice modes, and stylus modes 513 and 515, respectively. Section 502 also includes an image 516. Images may also have commands and modes associated with them. In this example, image 516 has been associated with an annotation mode. Accordingly, image has an associated annotation 517 attached to it. Section 503 ("Section 2") may also include a button 520 for associating information with the section as a whole. In this example, the button 520 has been used to associate an annotation with section 503. Section 503 also includes radio buttons 522 and 524, which have associated commands and modes 523 and 525, respectively. Each radio button may be selected by speaking the radio button name, which will activate the associated voice command and may further activate the voice and stylus modes.

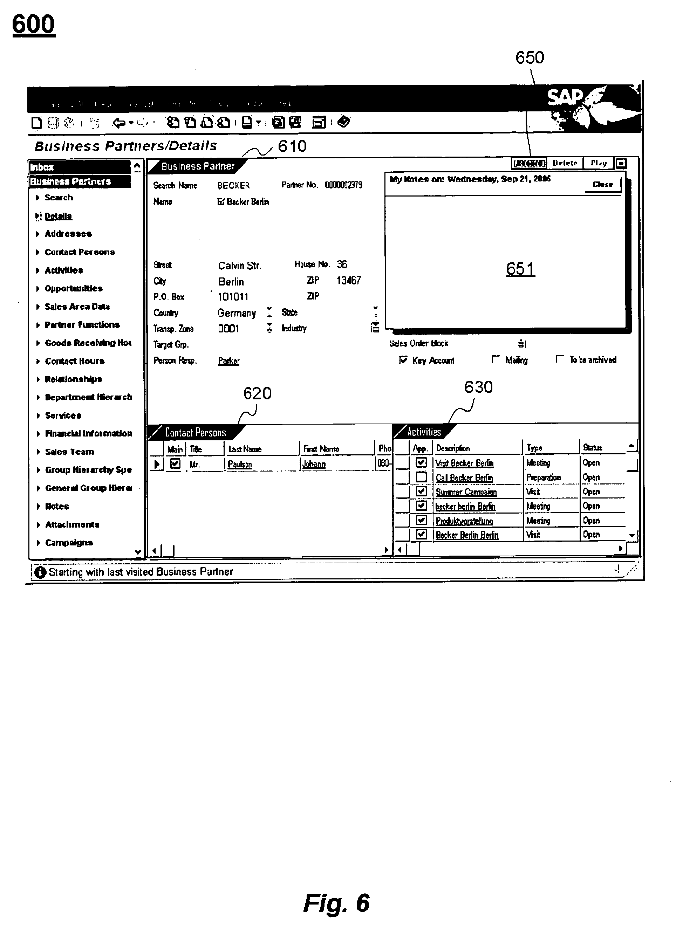

Fig. 6 is an example graphical user interface illustrating one embodiment of the present invention. In Fig. 6, a user interface page 600 (e.g., a web page) is displayed to a user with a variety of display objects, some of which may prompt a user for input. This example illustrates that voice or stylus annotations may be associated with pages as a whole. In this example, page 600 includes three (3) primary sections including a first section 610 entitled "Business Partner," a second section 620 entitled "Contact Persons," and a third section 630 entitled "Activities." A "Record" button 650 prompts a user for inputs that may be associated with the page as a whole. The "Record" button is another example of a display object. A user may select the "Record" button using either voice commands (i.e., speaking the word "Record") or through a touch screen command (i.e., touching the tip of the stylus to the record button). When the computer receives the command specifying the "Record" button 650, the software may cause an input field 651 to appear and activate voice and touch screen inputs. For instance, input field 651 may be associated with a free form dictation voice mode and a text entry stylus mode. Thus, if a user begins speaking, the system will automatically record the user's spoken comments and the comments will automatically be associated with the page for future access. If, on the other hand, the user uses the stylus to enter text into field 651, the system will automatically record the touch screen entry (e.g., as a stylus ink note), and the entry will automatically be associated with the page for future access. As mentioned above, in some embodiments voice entries may be recognized and translated into text messages, and similarly, stylus entries may be recognized by a text recognition engine and translated into text messages.

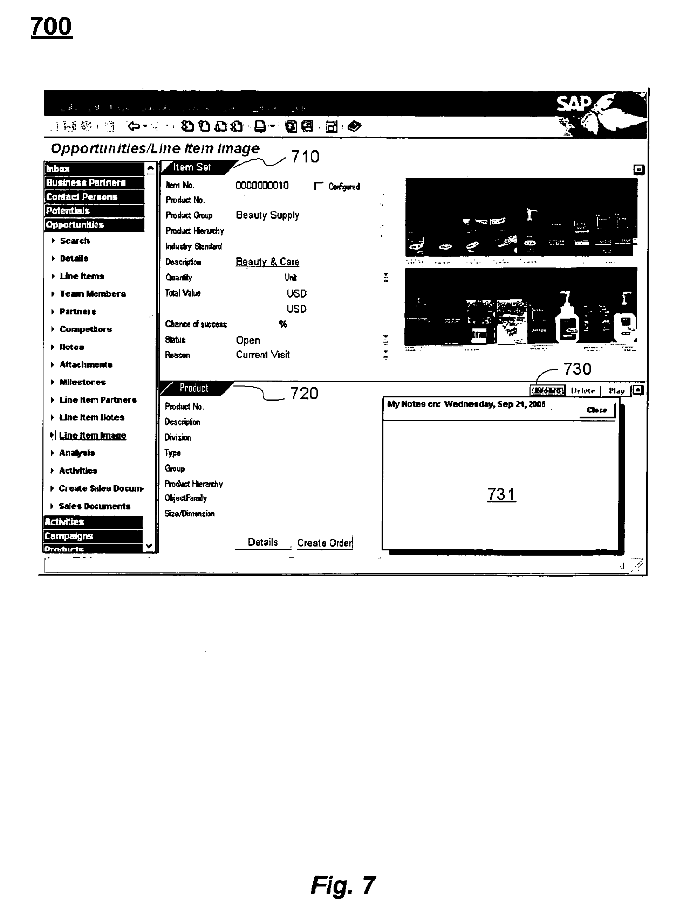

Fig. 7 is an example graphical user interface illustrating another embodiment of the present invention. This example illustrates that voice or stylus annotations may be associated with sections of pages. In this example, page 700 includes two (2) primary sections including a first section 710 entitled "Item Set" and a second section 720 entitled "Product." A "Record" button 730 in section 720 prompts a user for inputs that may be associated with the "Product" section of the page 720. The user may specify the selection of the "Record" input 730 in section 720 by either speaking the word "record" or by touching a stylus to the "Record" button. When the computer receives the command specifying the "Record" button 730, the software may cause an input field 731 to appear and activate voice and touch screen inputs. Similar to the page 600 of Fig. 6, input field 731 may be associated with a free form dictation voice mode and a text entry stylus mode. Thus, if a user begins speaking, the system will automatically record the user's spoken comments and the comments will automatically be associated with section 720 of page 700 for future access. If, on the other hand, the user uses the stylus to enter text into field 731, the system will automatically record the touch screen entry, and the entry will automatically be associated with section 720 of page 700 for future access. It should be noted that section 720 may not be display with section 710 under all circumstances. Or more generally, sections (or portions) of pages may be accessed together in some cases and separately in others. In some embodiments, users may tailor pages to show different types of information. However, according to this embodiment, the voice or stylus annotation may be associated with the section 720 whenever it is accessed.

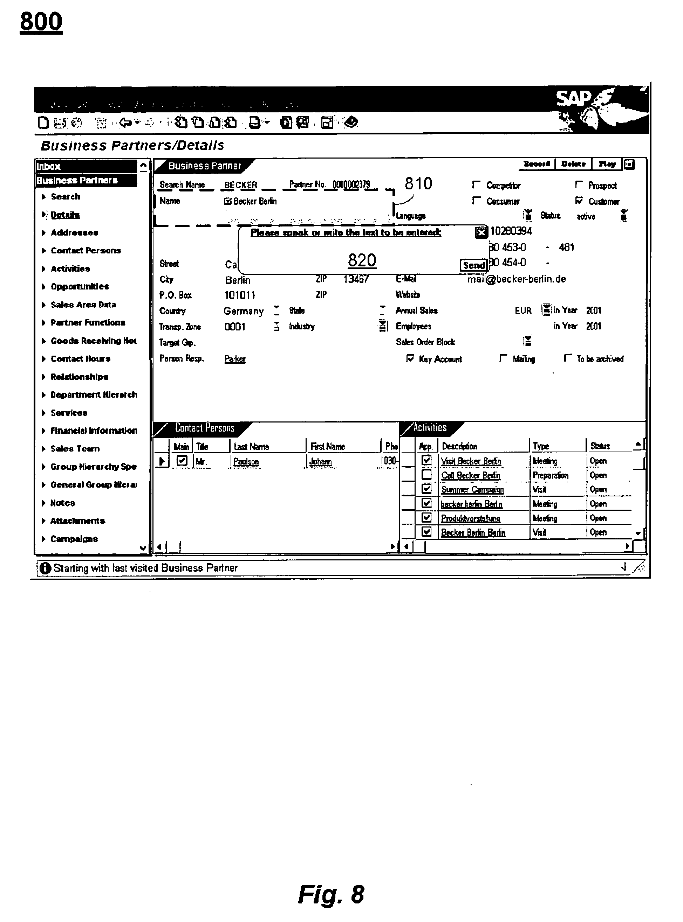

Fig. 8 is an example graphical user interface illustrating another embodiment of the present invention. In this example, a user may specify a particular field of a page, and voice modes or stylus modes associated with the field are automatically activated for receiving inputs. For instance, page 800 may be activated to receive a variety of voice commands associated with each of the different inputs available on the page, such as for the field 810 "Name," for example. The "Name" field 810 may have an associated voice command (e.g., a grammar) that will trigger activation of the "Name" field when the word "name" is spoken by a user. The "Name" field 810 may also be selected through touch screen by tapping the "Name" field with a stylus, for example. Multimodal selection allows users a more natural way of interfacing with the page. When the "Name" field is selected by either a voice command or a stylus, the field will activate associated voice and stylus modes for receiving input. In this example, a stylus text entry box 820 is generated and located adjacent to the field 810 of interest. The system is then ready to receive the name as either a voice input or touch screen input. The "Name" field may have an associated short text entry voice mode, for example, for receiving and recognizing names, and the recognized names may be inserted as text into the field of the page. For instance, a user may speak "John Smith," and the system may enter the voice input into a speech recognition component and translate the voice input into text. Additionally, the "Name" field may have an associated text recognition stylus mode for receiving and recognizing stylus name entries, and the recognized stylus name entries may be inserted as text into the field of the page. For instance, a user may write the name "John Smith" using a stylus in field 820, and the system may enter the written stylus script into a recognizer and translate the script into text.

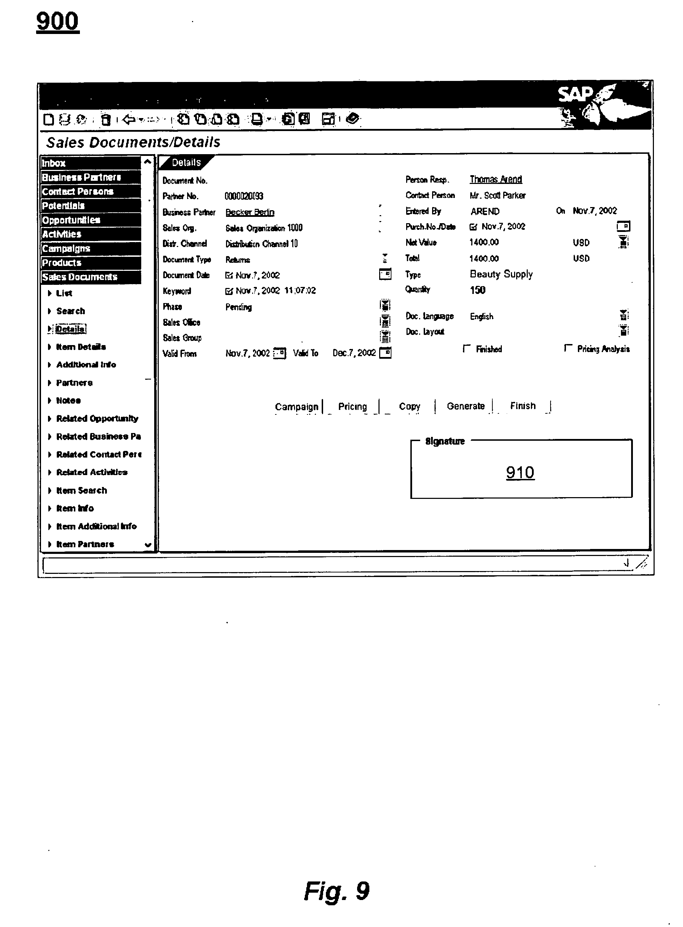

Fig. 9 is an example graphical user interface illustrating another embodiment of the present invention. This example illustrates authentication associated with particular display objects. In this example, a signature box 910 prompts a user for authorization. In this example, the details surrounding a sales transaction are illustrated, and authorization may be required from a sales manager, for example. A user may select the signature box using either a voice command (e.g., by speaking the words "signature" or "authorize sale") or by touch screen (e.g., tapping the tip of the stylus inside or near the signature box). Once authorization is selected, the system may activate both an authorization voice mode and a text entry stylus mode for receiving either a voice input or stylus signature. If the user provides a voice input (e.g., speaking their name), the system may automatically provide the voice input to a recognition engine to recognize the voice as the voice of a particular user, thereby authenticating the user. If the voice matches an authorized user, then the voice signature may be used to authorize the sale, for example. If the user provides a stylus input (e.g., a written signature), the system may automatically associate the stylus input with the signature box for authorization of the sale. In one embodiment, the signature may be provided to a recognition engine to recognize the signature as the signature of a particular user, thereby authenticating the user. If the signature matches an authorized user, then the signature may be used to authorize processing of the sale, for example.

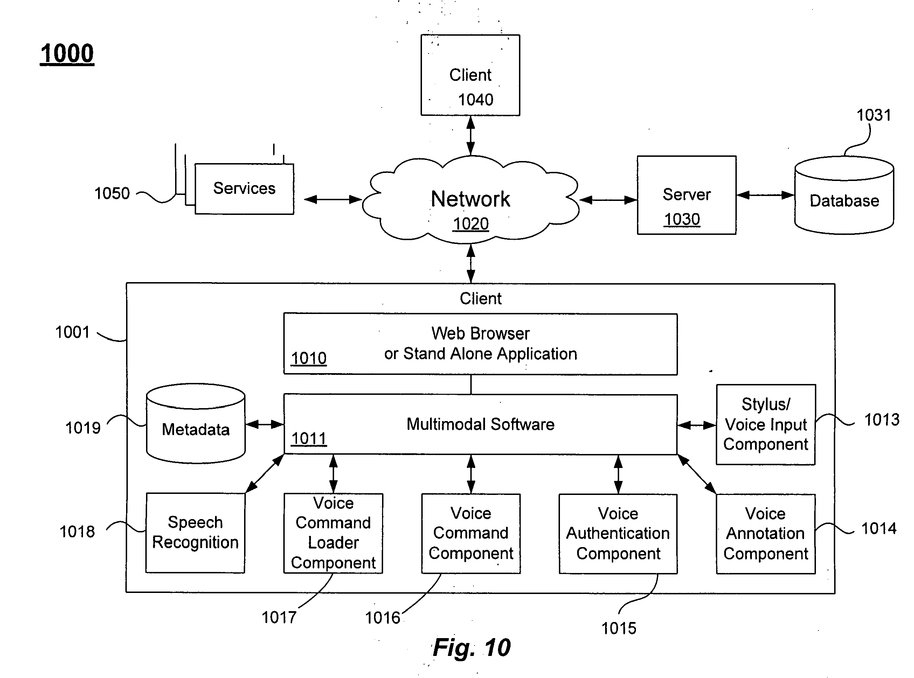

Fig. 10 illustrates a network based implementation of the present invention. In this example implementation, a client computer system 1001 includes a web browser or stand alone application 1010 coupled to multimodal software 1011. Multimodal software 1011 may be a plug-in to a browser, for example, or an enhancement program interfaced with a native application. Multimodal software 1011 includes a stylus/voice input component 1013, a voice annotation component 1014, voice authentication component 1015, voice command component 1016, voice command loader component 1017, speech recognition component 1018, and metadata repository 1019. Client computer system 1001 may be coupled to other applications ("Services" 1050) or a server 1030 over a network 1020 (e.g., the Internet or an Intranet), which may allow communication with other clients 1040, for example. In one embodiment, a browser or stand alone application may be enhanced with some or all of the functionality described above via software 1011 and related components. Stylus and voice input component 1013 manages the activation of voice and touch screen inputs and coordinates accessing rules and grammars from the metadata repository 1019 based on the received inputs. Voice annotation component 1014 manages the storage of annotations (e.g., voice or ink from stylus) and defines associations of the annotation to display objects such as pages, images, parts of a page, or fields, for example. Voice authentication component 1015 controls access rights to the system based on user inputs (e.g., voice). Voice command component 1016 controls the processing of voice navigation commands associated with each display object, including the selection of prompts on a page, for example. Voice command loader component 1017 loads metadata for generic voice controlled system commands that are controlled, for example, by the operating system and are not associated with a particular display object (e.g., the "Back" button on a browser or commands to "Open" a new "Folder" or "Close" command to a window). Such commands may be identified and passed through to the operating system for execution, for example. Speech recognition component 1018 may receive grammars and voice inputs and provide an output indicating whether or not the input was recognized and an indication of the recognized word or phrase.

A variety of parameters may be stored as metadata in repository 1019. In one embodiment, a web browser may receive a page, for example, and metadata may be associated with particular display objects. The metadata may define the relationships between the objects in the page and associated grammars to enable voice commands and modes. The metadata may be customized for each page depending on the number and types of display objects included in the page. For example, fields may have associated metadata that define grammars corresponding to voice commands for selecting the fields and corresponding to the voice modes associated with the fields. The grammars included in each page for each object may be used to constrain the voice inputs and improve recognition accuracy, for example. Voice metadata may be associated with older legacy systems so that such pages can become enabled for multimode functionality described herein. Similarly, the metadata may define the associations between the objects and annotations or the authentication parameters, for example.

As mentioned, client 1001 may be receive multimodale enabled web pages from a server 1030 over network 1020 from server 1030. Server 1030 may store information associated with pages including information for displaying particular display objects, associations between the display objects and voice commands, voice modes, and touch screen modes, for example. The data specifying the display objects and associations between the objects and voice commands, voice modes, and touch screen modes may be defined by users of other client systems or as part of an application or service, for example, and transmitted to other clients for use.

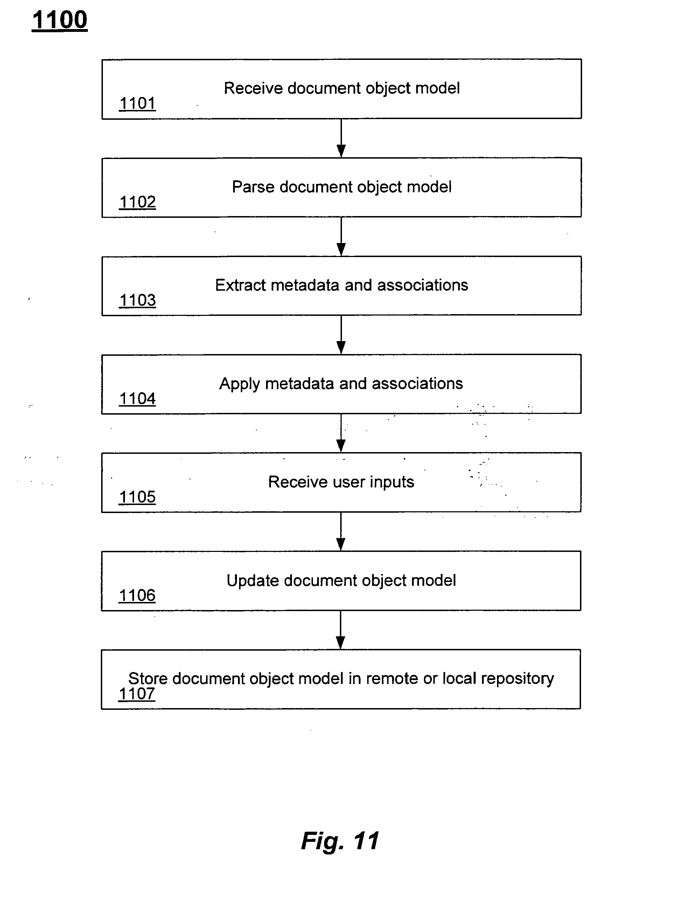

Fig. 11 is an example flow chart 1100 of a multimodal interaction across a network according to one embodiment of the present invention. At 1101, a system (e.g., a client) may receive a document object model ("DOM"). The DOM is logical representation of a page and the objects in a page, and typically defines a tree structure. At 1102, the DOM is parsed. At 1103, metadata and associations embedded in the DOM are extracted and loaded into the multimodal software layer. Associations may be stored as an association model for defining the association between voice and stylus inputs with particular objects in a display, for example. At 1104, the metadata and associations are applied to the objects in the DOM and the components of the multimodal software, and the page is displayed to the user. At 1105, the software receives inputs from the user. As described above, the inputs may be any of the voice commands, voice modes, or stylus modes described above including multimodal commands, annotations, authentications, or data entry. At 1106, the system updates the DOM based on the inputs. The new associations and/or user inputs may be embedded in the DOM and stored in a remote repository for access by other users at 1107. Of course, the DOM may also be stored locally.

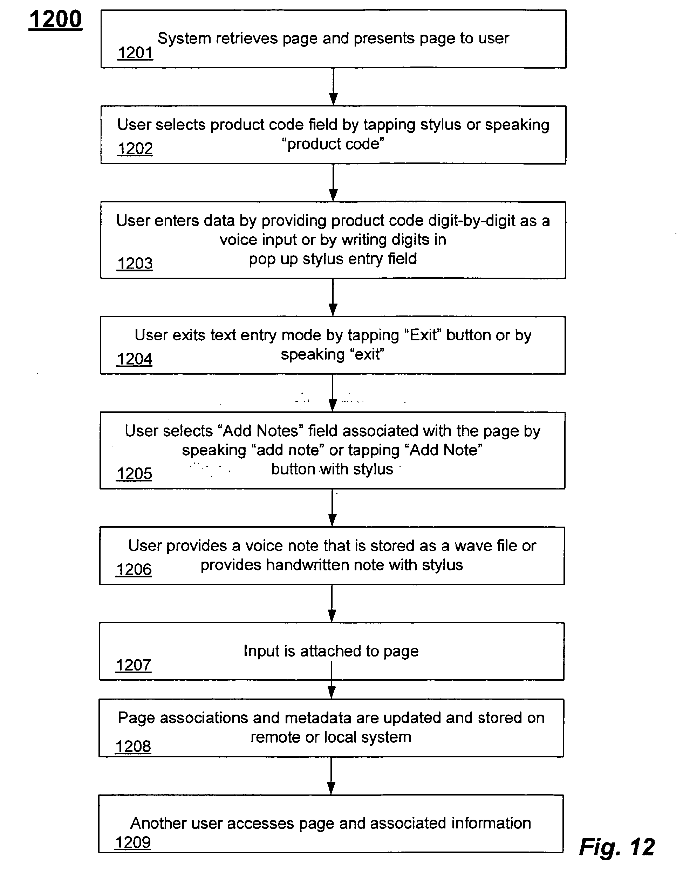

Fig. 12 is an example flow chart 1200 of a multimodal interaction according to one embodiment of the present invention. At 1201, the system retrieves a page and presents the page to a user with a plurality of inputs. Among other things, the page may include a "product code" field for entering the digits of a product code to retrieve information about a particular product. The page may further have an "Add Note" section for attaching notes to the page. At 1202, the user selects the product code field by tapping the stylus or speaking "product code." At 1203, the user enters the data by providing the product code digit-by-digit as a voice input or writing digits in pop up stylus entry field. The voice or stylus input may be automatically translated into a text entry by a recognizer and entered into field in accordance with a voice or stylus mode, such as a short text entry mode, associated with the product code field. At 1204, a user exits by tapping an "exit" button or speaking "exit." At 1205, the user selects the "Add Note" feature associated with the page by speaking "add note" or tapping "Add Note" with the stylus. At 1206, the user provides a voice note that is stored as a wave file or provides a handwritten note with the stylus. At 1207, the input note is attached to the page in accordance with the annotation mode. At 1208, the page associations and metadata are updated and stored on remote or local system. At 1209, another user accesses page and associated information. Other users may similarly modify or add to the associations to enhance the information included with the page.

An example application of the present invention may be a case where a sales person with a voice and touch screen enabled Table PC (a client) visits a customer site and communicates with a senior manager at headquarters. While at the customer site, the sales person may download a page the displays information about the customer being visited. The page may be generated as part of a customer relationship management ("CRM") application, for example, and may include a variety of information about the customer, information about products previously purchased by the customer, products to be sold, and other information for performing a sales transaction. According to embodiments of the present invention, the page may include a variety of voice or handwritten annotations from previous sales visits so that the sales person can understand more about the history of the customer relationship. Additionally, each display object in the page may include annotations giving the sales person more information about the history of the customer relationship. During the meeting with the customer, the sales person may make a variety of handwritten notes on the touch screen and voice notes that may be annotated with the page as a whole or to various display objects such as a "Delivery" section, or "Special Requirements" section. If the customer is a potentially valuable customer to the salesman's company, the sales person may attach a voice note or handwritten annotation to the page or a "Sales Terms" section of the page, or a "Price" field object on the page indicating that the customer desires to purchase very large volumes and desires a special discount on the price. The information may be stored on a remote database and accessed by a product manager back at headquarters. The product manager can access the annotation regarding the discount and authorize the transaction using either a voice or stylus. The sales person may then receive the authorized transaction and finalize the sales transaction.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims. The terms and expressions that have been employed here are used to describe the various embodiments and examples. These terms and expressions are not to be construed as excluding equivalent terms or equivalent processes, systems, or configurations of the features shown and described, or portions thereof, it being recognized that various modifications are possible within the scope of the appended claims.

## Claims

1. A computer-implemented method for processing user inputs comprising:
prompting a user for a plurality of inputs;
receiving a command specifying one of the plurality of inputs, wherein the system is activated to receive both a voice command and a manual selection command;
activating a voice and manual selection mode associated with the specified input; and
if a voice input is detected, processing the voice input in accordance with the associated voice mode, or if a manual selection input is detected, processing the touch screen input in accordance with the associated manual selection mode.

2. The method of claim 1 wherein the plurality of inputs are display objects each having an associated voice command, voice mode, and touch screen mode.

3. The method of claim 2 further comprising storing metadata for defining associations between display objects and voice commands, voice modes, and touch screen modes.

4. The method of claim 2 or 3 wherein the display objects include a page, a section of a page, a particular field of a page, an image, a button, a radio button, a check box, a menu, a list, an icon, a link, a table, a slider, a scroll bar, an user interface control, or a step of a program that is illustrated graphically on a screen.

5. The method of one or more of the preceding claims wherein the voice mode is a short text entry mode for translating a voice input into text and inserting the text into a field; a free form dictation mode for translating voice dictations into text; voice annotation mode for associating a voice input with a particular display object; or a voice authorization mode for performing an authorization using a received input.

6. A computer-implemented method for processing user inputs comprising:
displaying one or more display objects to a user;
associating at least one voice mode with one of said display objects;
associating at least one touch screen mode with the display object; and
associating at least one voice command with the display object.

7. The method of claim 6 further comprising receiving a voice command or a touch screen command specifying one of the display objects, and in accordance therewith, activating a voice and touch screen mode associated with the specified input.

8. The method of claim 7 further comprising detecting a voice input or touch screen input, wherein if a voice input is detected, processing the voice input in accordance with an associated voice mode, or if a touch screen input is detected, processing the touch screen input in accordance with an associated touch screen mode.

9. The method of anyone of claims 6 to 8 wherein the voice mode translates a voice input into text; associates an annotation with the display object; or performs an authorization.

10. The method of anyone of claims 6 to 9 wherein the display object is an element of a screen displayed to a user by a computer system; or
an application page or element of a page displayed to a user by an application.

11. The method of anyone of claims 6 to 10 wherein the display objects include a page, a section of a page, a particular field of a page, an image, a button, a radio button, a drop down menu, an icon, a link, or a step of a program that is illustrated graphically on a screen.

12. The method of anyone of claims 6 to 10 wherein the display objects include a web page.

13. A computer system including software for processing user inputs, the software comprising:
an annotation component for associating voice or touch screen inputs with particular objects in a display;
an input controller for selecting between voice and touch screen inputs;
a speech recognition component for receiving grammars and voice inputs and providing recognition results; and
metadata for specifying said grammars and said associations of voice or touch screen inputs with particular objects in a display.

14. The computer system of claim 13 further comprising an association model for defining the association between voice and touch screen inputs with particular objects in a display.

15. The computer system of claim 13 or 14 further comprising an authorization component for performing an authorization using a received input.

16. The computer system of anyone of claims 13 to 15 wherein the objects in the display include a page, a section of a page, a particular field of a page, an image, a button, a radio button, a drop down menu, an icon, a link, or a step of a program that is illustrated graphically on a screen.

17. The computer system of anyone of claims 13 to 16 wherein the system is a client system that downloads pages over a network, and wherein the pages include said metadata.

18. The computer system of claim 17 wherein said metadata further defines associations between objects in the display and voice commands, voice modes, and touch screen modes.

19. A computer-readable medium containing instructions for controlling a computer system to perform a method of processing user inputs comprising:
displaying a plurality of display objects;
receiving a command specifying one of the plurality of display objects, wherein the command is a voice command or a touch screen command;
activating a voice and touch screen mode associated with the specified display object; and
if a voice input is detected, processing the voice input in accordance with the associated voice mode, or if a touch screen input is detected, processing the touch screen input in accordance with the associated touch screen mode.

20. The computer-readable medium of claim 19 wherein the method further comprises storing metadata for defining associations between display objects and voice commands, voice modes, and touch screen modes.

21. The computer-readable medium of claim 19 or 20 wherein the voice mode translates a voice input into text; associates an annotation with the display object; or performs an authorization.

22. A computer-readable medium containing instructions for controlling a computer system to perform operations according to a method of anyone of claims 7 to 9 or 12.
